Europäisches Patentamt

European Patent Office

Office européen des brevets

(11) Publication number: **0 464 272 A1**

## EUROPEAN PATENT APPLICATION

(21) Application number: **90201813.4**

(22) Date of filing: **06.07.90**

(51) Int. Cl.5: **A01G 9/02**, B65D 21/02

(43) Date of publication of application:
**08.01.92 Bulletin 92/02**

(84) Designated Contracting States:
**AT BE CH DE DK ES FR GB GR IT LI LU NL SE**

(71) Applicant: **Veenman, Simon Johannes Marie**
**Maasdijk 224**
**NL-2691 NZ 's-Gravenzande(NL)**

(72) Inventor: **Veenman, Simon Johannes Marie**
**Maasdijk 224**
**NL-2691 NZ 's-Gravenzande(NL)**

(74) Representative: **Noz, Franciscus Xaverius, Ir.**
**et al**
**Algemeen Octrooibureau P.O. Box 645**
**NL-5600 AP Eindhoven(NL)**

(54) **Container provided with legs.**

(57) The invention relates to a container provided with legs (18), whereby the legs project under and/or above the container. In at least three places, located spaced from each other by some distance, projections (17) or recesses, extending substantially parallel to each other, are present on or in the container for detachably attaching the legs. The legs are thereby provided with correspondingly shaped recesses (20) or projections, as the case may be, which extend transversely to the longitudinal direction of the legs.

Fig.1.

EP 0 464 272 A1

The invention relates to a container provided with legs, said legs projecting under and/or above the container.

Such containers, which are for example used for accommodating and/or guarding objects, e.g. plants or the like, are used in many forms and for many purposes.

It may happen thereby that at certain stages of the treatment of said objects and/or of the containers themselves the presence of the legs is less desirable.

The object of the invention is therefore to obtain a container of the above kind, which has a simple construction and whereby the legs can easily be detached from or provided on the container as desired.

According to the invention this can be accomplished in that in at least three places, located spaced from each other by some distance, projections or recesses, extending substantially parallel to each other, are present on or in the container for detachably attaching the legs, which are provided with correspondingly shaped recesses or projections, as the case may be, extending substantially transversely to the longitudinal direction of the legs.

When using the construction according to the invention the legs can be coupled to or detached from the container, as the case may be, in a simple manner by moving the legs and the containers with respect to each other in a direction transversely to the longitudinal direction of the legs.

In particular the invention can be used with a box provided with a bottom and with at least two side walls extending upwards from the bottom and parallel to each other, whereby the box is provided with upwardly extending legs near the ends of said side walls .

In raising chrysanthemums use is made of so-called sliding boxes, that is, boxes provided with a bottom, with two side walls located along opposite edges of said bottom and extending parallel to each other, which side walls are near one end connected by a third side wall extending transversely between said side walls. On the edge of the bottom located opposite said third side wall there is not provided an upright wall.

Near the corner points of the box there are provided legs extending upwards from the bottom of the box, said legs being connected together in pairs by means of intermediate pieces extending parallel to the third side wall. In such boxes disposed in a greenhouse or the like the germination and to a certain extent the raising of the plants takes place, after which the plants are transported in said boxes to another Dutch-type greenhouse or the like, in order to grow up further there. The clods supporting the plants are hereby moved out of the box along the end having no side wall. For said moving out of the plants the box can be manipulated by
means of the legs and/or the intermediate pieces used as handles.

Although such boxes have been used for many years, an important drawback of said boxes is that the upwardly extending legs cast a shadow on parts of the contents of the box, which may lead to irregular growth of the crop.

Furthermore the legs form an impediment when the crop is being treated during its growing-up stage, as is the case when carrying out spraying activities and the like.

The object of the invention is therefore to obtain a box of the above kind, whereby the above drawbacks will not occur when said box is used.

According to the invention this can be accomplished in that the ends of the two opposite side walls are provided with recesses, or with projections extending at least substantially in the longitudinal direction of the side walls, and that the lower ends of the legs are provided with projections fitting said recesses and extending at least substantially in the longitudinal direction of the side walls, or with recesses suitable for accommodating said projections, as the case may be, all this in such a manner that the legs can be detachably coupled to the boxes.

When using the construction according to the invention the legs can easily be coupled to or be detached from the boxes, whilst it is still possible to carry the boxes by means of the legs. During the initial growing-up stage the boxes may be disposed without the legs, therefore, whilst after the initial growing-up stage, prior to the boxes being transported, the legs can be attached to the boxes, whereby the boxes can be stacked on top of each other and for removing the contents of the boxes said boxes can be manipulated by means of the legs.

It is noted that containers or boxes having detachable legs are known per se.

From British Patent 2,008,077 there is for example known a box having a bottom and upwardly extending side walls joining up with the four side edges of the bottom. In the corner points of the box there may be provided detachable legs hereby. Said legs must be inserted into recesses provided in the upper edge of the box from below, however, to which end the boxes must be lifted. It will be apparent that providing the legs in this manner will be a time-consuming and difficult activity when the boxes are in filled condition.

This drawback of the construction according to British patent 2,008,077 is overcome with the construction according to European Patent 0178707, whereby the legs can be inserted from above. By itself this construction is quite satisfactory for the purpose aimed at, but said embodiment is less suitable for lifting the box by means of the legs.

The invention will be explained in more detail hereinafter with reference to a few possible embodiments of the construction according to the invention diagrammatically illustrated in the accompanying figures.

Figure 1 shows a first embodiment of a container according to the invention.

Figure 2 shows a pair of legs to be used with a container according to Figure 1, said legs being coupled together.

Figure 3 shows a second embodiment of a container according to the invention.

Figure 4 is a plan view of a third embodiment of a container according to the invention.

Figure 5 is a side elevational view of Figure 4.

Figure 6 is an elevational view of a fourth embodiment of a container according to the invention, with a leg coupled thereto.

Figure 7 is a side elevational view of Figure 6, along the arrow VII of Figure 6.

Figure 8 is a side elevational view of Figure 6, along the arrow VIII of Figure 7.

Figure 9 is a perspective, diagrammatic view of a fifth embodiment of a box or container having legs according to the invention.

Figure 10 is a perspective view of a pair of legs, connected by means of an intermediate piece, such as used with the box illustrated in Figure 9.

Figure 11 is a perspective view of a part of the box illustrated in Figure 9, without legs.

Figure 12 is a diagrammatic perspective view of a sixth embodiment of a box or container having legs according to the invention.

Figure 13 is a perspective view of an embodiment of a pair of legs connected by an intermediate piece such as used with the box illustrated in Figure 2.

Figure 14 is a perspective view of the box illustrated in Figure 12, without legs.

Figure 15 is a perspective view of a further possible embodiment of a leg according to the invention.

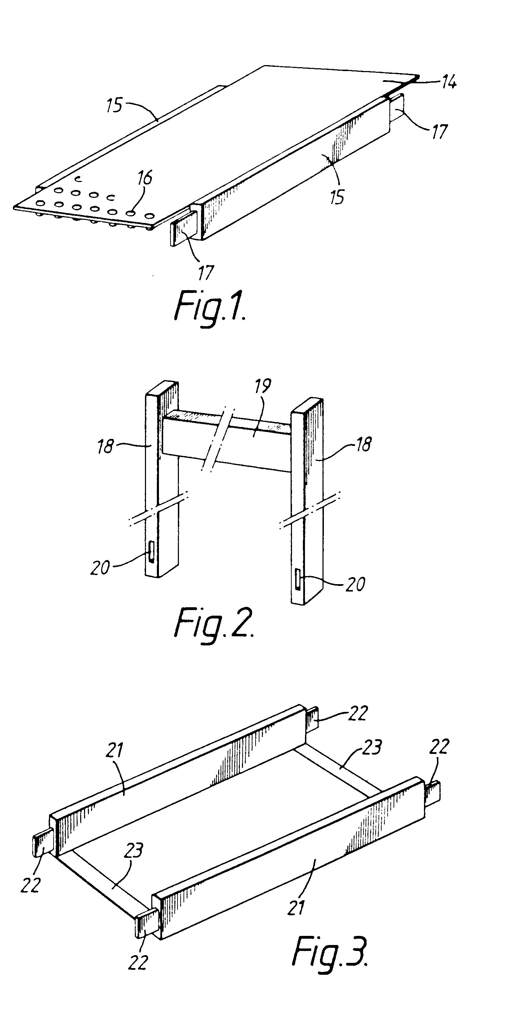

The container or box illustrated in Figure 1 comprises a rectangular bottom plate or carrier plate 14, whereby vertically extending side walls 15, which extend downwards from the plate 14 in the illustrated embodiment, arae secured to two parallel longitudinal edges of said plate 14.

Said plate 14 is provided with a large numer of cup-shaped recesses 16 provided in rows and columns, only a few of which being illustrated, said recesses e.g. being suitable for accommodating clods of earth containing seedlings or plants.

On the ends of the walls 15 there are provided lip-shaped projections 17 having a rectangular section, which extend in line with the side walls 15.

In Figure 2 two legs 18 are illustrated, which are mutually connected near their upper ends by means of an intermediate piece 19. Near the lower ends of the legs there are provided recesses 20 having a rectangular section, which recesses extend at least substantially perpendicularly to the longitudinal direction of the legs.

The dimensions of the recesses 20, and the mutual distance between the recesses 20, corresponds with the dimensions of the lip-shaped projections 17 and the distance between a pair of projections 17 provided on the ends of the two side walls. It will be apparent, therefore, that near both ends of the side walls 15 legs 18 can be coupled to a container illustrated in Figure 1, by inserting the two projections located near each end of a container into the recesses 20, which are provided in a pair of coupled legs 18. The container thus provided with legs can easily be carried then by means of the intermediate pieces connecting the legs. Furthermore it is possible to stack several containers provided with legs on top of one another. Preferably the upper ends of the legs or projections formed at the upper ends of the legs are shaped such that they fit correspondingly shaped recesses provided in the lower ends of the legs.

Instead of coupling the legs 18 to the container illustrated in Figure 1 in such a manner that the legs project above the plate 14, when seen in Figure 1, it will also be possible to connect the legs to the container in a position turned through 180° with respect to said position, so that the legs then project under the plate 14, when seen in Figure 1.

Of course many variations to this embodiment are possible.

Thus it is e.g. possible to provide the legs with projecting parts corresponding with the projecting parts 17, whereby in that case recesses suitable for accommodating such projecting parts will be located in the ends of the side walls 15.

Furthermore it is of course not necessary that the projecting parts have a rectangular section. The projecting parts can e.g. also be formed by pin-shaped means, whether or not circular, whereby possibly a projecting part 17 may be replaced by several pins located above one another.

Also it is not necessary that the legs are coupled together in pairs, since loose legs may also be used.

Also the plate 14 may of course have many different configurations, and possibly be provided with perforation openings or the like.

Figure 3 shows an embodiment provided with a pair of wall parts 21 corresponding with the side walls 15, at whose ends there are again provided lip-shaped projections 22 corresponding with the lip-shaped projections 17. In this embodiment the two side walls 21 are connected by a few connecting strips 23. Such a container may e.g. be used for accommodating loose bottom plates (not shown), whether or not having openings. Legs can thereby be detachably coupled to the container illustrated in Figure 3, in a similar manner as described above with reference to Figures 1 and 2, by means of the lip-shaped projections 22 or by means of the recesses provided in the ends of the side walls 21.

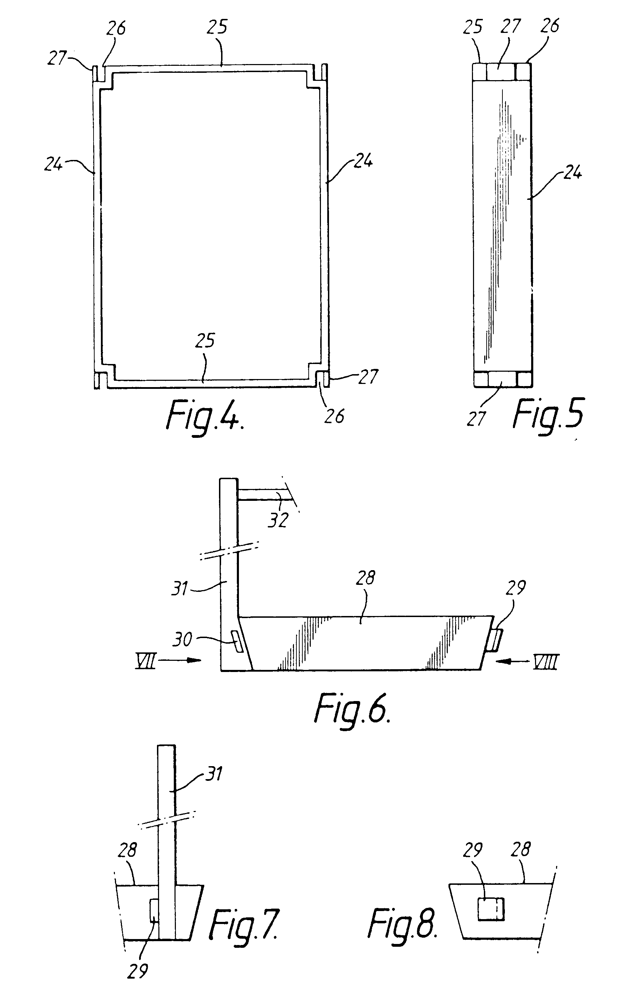

Figure 4 and 5 illustrate a container in the shape of a rectangular frame, provided with two side walls 24 extending parallel to each other, which are mutually connected near their ends by means of transverse walls 25 extending perpendicularly to the side walls 24.

Near the connections of the transverse walls 25 to the longitudinal walls 24 there are formed recesses 26 located at the outside of the box, whereby lip-shaped projections 27 corresponding with the lip-shaped projections 17 (Figure 1) and located in line with the side walls 24 project into said recesses 25.

It will be apparent that to such a frame-shaped container legs can be detachably coupled, in a manner similar to the one described above. Such a frame container can e.g. be placed on top of the legs of a container containing products or the like, whereby the annular containter surrounds the objects carried by the container located thereunder. The annular container may for example also be constructed in such a manner that loose bottom plates, whether or not provided with recesses, cup-shaped means or the like can be placed in said annular container.

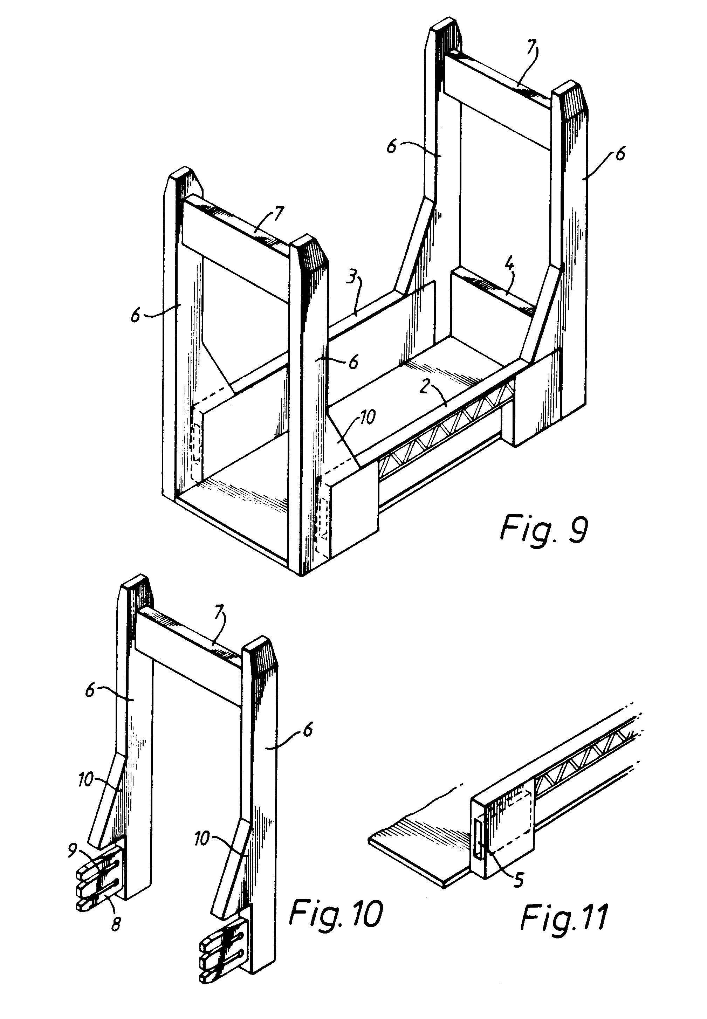

Figures 6 - 8 diagrammatically indicate a box-shaped container 28 having upwardly sloping side walls.

Near the corner points of the box there are secured coupling means 29 having an L-shaped section, in such a manner that the one leg of such an L-shaped coupling means extends perpendicularly to the relevant wall of the box and that the other leg of the L-shaped coupling means extends parallel to the relevant wall of the container. The leg of the L-shaped coupling means extending parallel to the wall again forms a projection in that case, which can be accommodated in a correspondingly shaped recess 30, which is provided in a leg 31 to be coupled to the box.

As is illustrated in Figure 6 the lower end of the legs may be shaped such thereby, that the boundary wall of said lower end directed towards the box abuts against the outside of the upwardly sloping side wall of the box, whilst the boundary wall of the leg remote from the side wall of the box extends at least substantially vertically, as a result of which, as will be apparent from Figure 6, a solid wide lower part of the leg is obtained.

If desired a pair of legs 31 may be mutually connected again by means of an intermediate piece 32.

It will be apparent that within the spirit of the further containers that are illustrated also a container having upright side walls may be similarly provided with L-shaped coupling means.

Thus a great many variations of the various features of the containers described above and illustrated in the Figures will be conceivable within the spirit and scope of the invention, as well as additions and/or alterations to the present embodiments.

Thereby it is for example not necessary that a substantially rectangular container is used, but the container may also have different shapes. It is definitely not necessary either thereby that the container is supported by four legs, but also other numbers of legs can be coupled to the containers.

Furthermore it will be possible to design the legs such that possibly they project above as well as under the container.

Nor is it necessary for the longitudinal axes of the projections or the recesses, as the case may be, to extend exactly horizontally, but they may also include a small angle with the horizontal.

The box or container illustrated in Figure 9 comprises a bottom 1 and a pair of side walls 2 and 3 extending upwards from opposite side edges of the container. As will be apparent from said Figure the side walls 2 and 3 do not extend as far as the boundary edges of the bottom 1 extending perpendicularly to said side walls. Near one of the boundary edges of the bottom 1 extending perpendicularly to the side walls 2 and 3 there is provided a third side wall 4 extending perpendicularly to the side walls 2 and 3. Near the end of the bottom plate 1 located opposite the side wall 4 there is not provided a side wall.

As is illustrated in more detail in Figure 11 recesses 5 having a substantially rectangular section are provided in the ends of the side walls 2 and 3.

The box is furthermore provided with four legs 6 extending upwards from the bottom of the box, said legs 6 near their upper ends being connected in pairs by an intermediate piece 7. When the legs are coupled to the box as is illustrated in Figure 9 said intermediate pieces 7 extend parallel to the side wall 4.

As is illustrated in more detail in Figure 10 projecting parts 8 having a more or less rectangular section are provided on the lower ends of the legs, in which there are formed slotted holes 9 extending in the longitudinal direction of said parts. Said slotted holes are open at their sides remote from the legs 7, and extend approximately perpendicularly to the longitudinal direction of said legs 6, to a location near said legs 6. Said projecting parts or projections 8 having a more or less rectangular section are formed in such a manner that they fit recesses 5 for coupling the legs 6 to the box 1. As is illustrated in Figure 9 the projections 8 are thus slid into the relevant recesses 5 of the side walls 2 and 3, whereby the construction is such that said projecting parts 8 can be slid entirely into the recesses 5, until the lower ends of the legs abut against the upright ends of the side walls 2 or 3. Possibly, as is illustrated in Figures 9 and 10, the legs 6 may furthermore be provided with noses 10 located above the projections 8, said noses 10 being supported on the upper edges of the side walls 2 and 3 in the attached condition of the legs 6.

Preferably the upper ends of the legs 6 slightly project above the intermediate pieces 7, whilst in the lower ends of the legs 6 there are thereby provided recesses corresponding with the upper ends of the legs, so that when a plurality of boxes having legs are stacked on top of one another the upper ends of the legs 6 of a box will come to lie in the recesses provided in the legs 6 of a box placed thereabove.

For raising plants during a first stage, as described above, the boxes without legs can be disposed is a raising room suitable for that purpose, such as a Dutch-type greenhouse or a greenhouse. For the further transport of the plants raised in this manner the legs 6 can be coupled to the boxes in the manner described above, after which the boxes provided with legs in this manner may be stacked on top of each other for further transport, with any risk for damage to the plants present in the boxes.

For handling the boxes and for possibly moving out the contents of the box via the side of the box, it is possible to handle and manipulate the box by picking up the box by means of the legs 6 and/or the intermediate pieces 7.

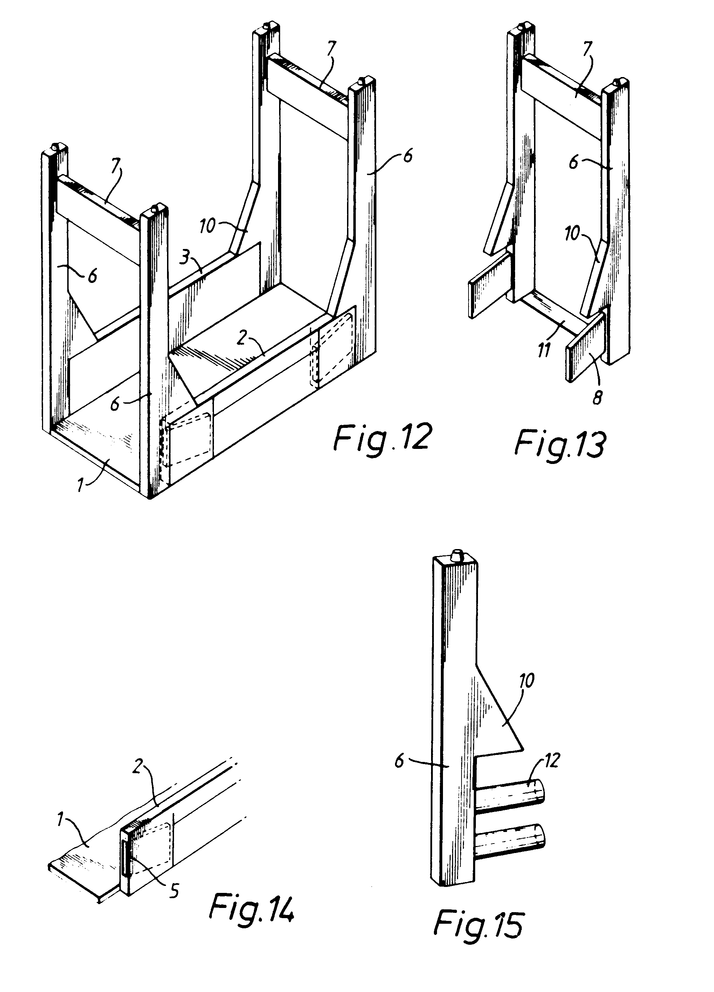

The embodiment of the construction according to the invention illustrated in Figures 12 - 14 at least substantially corresponds with the construction described above, and consequently corresponding parts of the box and legs illustrated in Figures 12 - 14 have been given the same reference numbers as the ones used om Figures 9 - 11.

An important difference between the embodiment according to Figures 12 - 14 and the embodiment according to Figures 9 - 11 lies in the fact that with the embodiment according to Figures 9 - 11 the projections 8 slope downwards from their point of attachment in a direction remote from the leg. For the sake of clarity the angle which the longitudinal axis of the projection includes with the horizontal has been illustrated strongly enlarged thereby, in reality the projection 8 will extend less obliquely.

As a result of the above-described oblique extension of the projection 8 it is effected that when a downward force is exerted on the legs the projection 8 will be pressed down firmly into the recess 5 in question, as a result of which it is prevented, in particular with boxes stacked on top of each other, that the projections possibly move out of the recesses 5 under the influence of the forces exerted on the legs.

As is furthermore illustrated in Figure 13 a connecting strip 11 may be provided between the lower ends of the legs 8, which will move under the bottom of the box when the legs are being coupled to the box, for which purpose the lower side of the box may be provided with a corresponding recess for accommodating said connecting strip.

Of course many variations and/or additions to the constructions described above and illustrated in the Figures are conceivable within the spirit and scope of the invention.

Thus, as illustrated in Figure 15, use may be made of one or more pin-shaped projections 12, instead of a substantially rectangular projection 8. Of course the side walls of the box will be provided with corresponding recesses thereby.

Instead of using legs mutually coupled in pairs it is furthermore also possible to make use of loose legs, whether or not provided with a part extending transversely to the legs, in order to facilitate taking hold of the legs in question.

In the embodiments described above the projections 8 or 11, as the case may be, are secured to the legs, whilst the side walls are provided with recesses. It will be apparent, however, that if desired said projections may be provided on the ends of the side walls in question, whilst in that case the lower ends of the legs will be provided with recesses suitable for accommodating the projections in question.

Instead of a connecting strip located under the bottom 1 of the box there may also be provided a connecting strip between the lower ends of the legs, which latter connecting strip has a height which is about equal to the thickness of the bottom and which abuts against one end of the bottom in the attached position of the legs.

Although hereinabove, with reference to Figures 9 - 15, mention has been made in particular of the use of the construction according to the invention with a so-called sliding box, which has no upright side wall at at least one end, it will of course also be possible to use the invention with boxes or containers having different constructions from the ones illustrated in the drawings and/or with boxes or containers used for different purposes.

## Claims

1. A container provided with legs, said legs projecting under and/or above the container, in at least three places, located spaced from each other by some distance, projections or recesses, extending substantially parallel to each other, are present on or in the container for detachably attaching the legs, which are provided with correspondingly shaped recesses or projections, as the case may be, extending transversely to the longitudinal direction of the legs.

2. A container according to claim 1, wherein said projections or recesses are provided near the ends of two wall parts of the container extending at least substantially parallel to each other.

3. A container according to claim 2, wherein said two wall parts are mutually coupled by a plate-shaped part.

4. A container according to claim 2, wherein said two wall parts are mutually coupled by connecting strips extending transversely to said wall parts.

5. A container according to claim 2, wherein said two wall parts are connected near their ends by means of further wall parts extending transversely to said wall parts.

6. A container according to any one of the preceding claims, wherein said projections form part of L-shaped coupling means provided on said wall parts.

7. A container according to any one of the preceding claims, provided with an upwardly sloping wall, wherein one end of a leg abuts with one side against the oblique wall and one opposite side of the leg extends vertically.

8. A box or container provided with a bottom and with at least two side walls extending upwards from the bottom and parallel to each other, whereby the box is provided with upwardly extending legs near the ends of said side walls, characterized in that the ends of the two opposite side walls are provided with recesses, or with projections extending at least substantially in the longitudinal direction of the side walls, and that the lower ends of the legs are provided with projections fitting said recesses and extending at least substantially in the longitudinal direction of the side walls, or with recesses suitable for accommodating said projections, as the case may be, all this in such a manner that the legs can be detachably coupled to the boxes.

9. A box or container according to any one of the preceding claims, wherein above said projections or recesses the legs are provided with projecting noses, which are supported on the upper edges of the side walls in the coupled position.

10. A box or container according to any one of the preceding claims, wherein the legs are coupled together in pairs near their upper ends by means of an intermediate piece.

11. A box or container according to any one of the preceding claims, wherein the legs are coupled together in pairs near their lower ends by means of a connecting strip.

12. A box or container according to any one of the preceding claims, wherein said projection has an at least substantially rectangular section.

13. A box or container according claims 1 - 11, wherein a projection is formed by a pin.

Fig.1.

Fig.2.

Fig.3.

Fig.4.

Fig.5

Fig.6.

Fig.7.

Fig.8.

Fig. 9

Fig. 10

Fig. 11

Fig.12

Fig.13

Fig.14

Fig.15

**European Patent Office**

**EUROPEAN SEARCH REPORT**

Application Number

**EP 90 20 1813**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 544 021  (WILSON) <br> * column 1, line 56 - column 2, line 53; figures 1-3 * <br> – – – | 1-5 | A 01 G 9/02 <br> B 65 D 21/02 |
| A | US-A-3 987 924  (UITZ) <br> * column 3, lines 7 - 50 * * column 5, lines 51 - 68; figures 1-3, 10 * <br> – – – | 8 | |
| A | DE-A-3 511 874  (FISCHER) <br> * abstract * * page 3, lines 19 - 31; figure 1 * <br> – – – | 8 | |
| A | FR-A-2 332 919  (DEVAUX) <br> * the whole document * <br> – – – | 8 | |
| A | GB-A-449 994  (DODSON) <br> * the whole document * <br> – – – – – | 8 | |

|  | TECHNICAL FIELDS SEARCHED (Int. Cl.5) |
|---|---|
|  | A 01 G <br> B 65 D |

The present search report has been drawn up for all claims

| Place of search | Date of completion of search | Examiner |
|---|---|---|
| The Hague | 07 March 91 | HERYGERS J.J. |